(19) Europäisches Patentamt
European Patent Office
Office européen des brevets

(11) **EP 1 336 833 B1**

(12) **EUROPÄISCHE PATENTSCHRIFT**

(45) Veröffentlichungstag und Bekanntmachung des Hinweises auf die Patenterteilung:
**01.03.2017  Patentblatt 2017/09**

(51) Int Cl.:
***G01M 17/02*** *(2006.01)*      ***G01L 5/20*** *(2006.01)*

(21) Anmeldenummer: **02028451.9**

(22) Anmeldetag: **19.12.2002**

(54) **Verfahren zur Korrektur von Lateralkraftmesswerten eines Fahrzeugreifens**

Method for correcting of lateral force measuring values of a vehicle tire

Méthode pour corriger les valeurs de force latérale mesurées d'une roue de véhicule

(84) Benannte Vertragsstaaten:
**AT BE BG CH CY CZ DE DK EE ES FI FR GB GR IE IT LI LU MC NL PT SE SI SK TR**

(30) Priorität: **15.02.2002  DE 10206259**

(43) Veröffentlichungstag der Anmeldung:
**20.08.2003  Patentblatt 2003/34**

(73) Patentinhaber: **SEICHTER GmbH**
**D-30519 Hannover (DE)**

(72) Erfinder: **Meinen, Michael**
**31171 Nordstemmen (DE)**

(74) Vertreter: **Patentanwälte Thömen & Körner**
**Postfach 59 31**
**30059 Hannover (DE)**

(56) Entgegenhaltungen:
| | |
|---|---|
| **EP-A- 0 766 079** | **DE-A1- 2 715 111** |
| **DE-A1- 3 835 985** | **DE-A1- 3 922 288** |
| **DE-A1- 4 019 992** | **DE-A1- 19 734 904** |
| **US-A- 3 473 422** | **US-A- 3 739 533** |
| **US-A- 4 095 374** | **US-A- 4 805 125** |
| **US-A- 5 263 284** | **US-A- 6 139 401** |
| **US-B1- 6 386 945** | |

**Beschreibung**

Die Erfindung betrifft ein Verfahren zur Korrektur von Lateralkraftmesswerten nach Anspruch 1.

Aus der US 3,473,422 A sind eine Vorrichtung und ein Verfahren zur Messung und Anzeige von Lateralkräften eines in Rotation versetzten Fahrzeugreifens bekannt, indem die seitliche Verschiebung einer mit dem Fahrzeugreifen kontaktierten Rolle bestimmt wird.

Außerdem sind aus der DE 2715111 A ein Verfahren und eine Vorrichtung zum Messen und Korrigieren von Fahrzeugreifen-Schwingungen bekannt.

Ferner ist aus der US 6,139,401 ein Verfahren zur Korrektur von Unwucht von Fahrzeugreifen bekannt.

Fahrzeugreifen werden nach der Produktion einer Vielzahl von Prüfungen unterzogen, um die Einhaltung von Mindesttoleranzen sicherzustellen und bei Fahrzeugreifen, die diese Mindesttoleranzen einhalten, ferner eine Einteilung in Güteklassen zu ermöglichen. Eine dieser Prüfungen besteht in der Bestimmung eines Konuseffektes. Ein Konuseffekt tritt bei konisch gefertigten Fahrzeugreifen oder ungleichmäßigen Federkonstanten auf. Er führt dazu, dass zwischen dem rollenden Fahrzeugreifen und der Fahrbahnoberfläche eine Lateralkraft ausgeübt wird.

Bei einer Fahrzeugreifenprüfanlage wird die Fahrbahnoberfläche durch ein Lastrad nachgebildet, gegen dessen Mantelfläche ein in Drehung versetzter Fahrzeugreifen gedrückt wird. Die Lateralkraft lässt sich über Messaufnehmer vermitteln, die an den Einspannorten der Achse des Lastrades angeordnet sind.

Der Konuseffekt wird ermittelt, indem ein mittlerer Wert einer Lateralkraft für Rechtslauf und ein mittlerer Wert einer Lateralkraft für Linkslauf des Fahrzeugreifens bestimmt und die Summe der beiden Lateralkräfte durch zwei dividiert wird. Diese Messung wird üblicherweise in einer der beiden möglichen Ausrichtungen durchgeführt, in der die Markierung mit den Kenndaten des Fahrzeugreifens, als DOT bezeichnet, nach oben oder nach unten weist.

Es hat sich nun gezeigt, dass nach Umdrehen des Fahrzeugreifens, also der Markierung nach unten, wenn sie vorher nach oben wies oder umgekehrt, und Wiederholung der Messung ein abweichender Konuseffekt ermittelt wird, obwohl hier der betragsmäßig gleiche Wert lediglich mit umgekehrtem Vorzeichen auftreten müsste.

Weiterhin wurde festgestellt, dass ebenfalls unterschiedliche Werte für den Konuseffekt ermittelt werden, wenn der Fahrzeugreifen lateral versetzt an einer anderen Stelle der Mantelfläche des Lastrades in Kontakt gebracht wird.

Die ermittelten Abweichungen werden durch die Fahrzeugreifen-prüfanlage selbst erzeugt und erfordern eine Korrektur, um eine Reproduzierbarkeit der Messungen und einen Vergleich unterschiedlicher Reifen und auf unterschiedlichen Prüfanlagen geprüfter Reifen zu ermöglichen.

Der Erfindung liegt die Aufgabe zugrunde, ein Verfahren zur Korrektur von Lateralkraftmesswerten anzugeben, das ohne mechanische Feinjustierung eine zuverlässige Korrektur unabhängig vom Kontaktort eines Fahrzeugreifens auf dem Lastrad ermöglicht.

Diese Aufgabe wird bei einem Verfahren zur Korrektur von Lateralkraftmesswerten durch die Merkmale des Anspruchs 1 gelöst.

Weiterbildungen und vorteilhafte Ausgestaltungen der Erfindung ergeben sich aus den Unteransprüchen.

Die erfindungsgemäßen Maßnahmen beruhen auf der Erkenntnis, dass Verfälschungen der von den Messaufnehmern ermittelten Lateralkräfte durch Radialkräfte aufgelöst werden, die aufgrund einer nichtidealen Aufteilung in Kraftkomponenten beim Meßaufnehmer entstehen und dazu noch Unterschiede zwischen dem oberen und unteren Messaufnehmer aufweisen können. Diese Erscheinung wird auch als Übersprechen bezeichnet.

Dieser Einfluss kann durch eine Vorabbestimmung der unterschiedlichen Einflüsse der Messaufnehmer der unteren und oberen Einspannung der Drehachse des Lastrades ermittelt werden. Dies geschieht dadurch, dass ein Kippmoment auf die Achse des Lastrades in Richtung der betrieblichen Radialbeanspruchung in zwei gegenüber liegenden Richtungen ausgeübt wird und dabei das Übersprechen auf die Messaufnehmer für Lateralkräfte ermittelt wird. Das Kippmoment wird durch Aufprägen einer exzentrischen Axialkraft auf das Lastrad, z. B. durch Aufsetzen eines Gewichtes vorgenommen, und es werden dann zwei Messungen durchgeführt. Es handelt sich um eine erste Messung, bei der die Kraft nahe der Berührungslinie mit dem Fahrzeugreifen, von der Betrachtungsseite des Bedieners her vorne, angreift und um eine zweite Messung, bei der die Kraft auf der gegenüber liegenden Seite, von der Betrachtungsseite des Bedieners her hinten, angreift.

Aus dem Unterschied der beiden Messungen werden dann Korrekturwerte ermittelt, mit denen bei künftigen Messungen die gemessenen Lateralkräfte korrigiert werden. Mit den korrigierten Lateralkraftmesswerten können dann Ergebnisse für den Konuseffekt ermittelt werden, die reproduzierbar und vergleichbar sind und aus denen die Einflüsse der Reifenprüfanlage eliminiert sind.

Bei einer vollständigen Korrektur werden mehrere Schritte ausgeführt. In einem ersten Schritt wird ein Übersprechmaß von Radialkräften auf die Messaufnehmer für Lateralkräfte ermittelt nach der Formel:

$$Rad_1' = \left( \frac{Lat_{1,vorne} - Lat_{1,hinten}}{Rad_{1,vorne} - Rad_{1,hinten}} - \frac{Lat_{2,vorne} - Lat_{2,hinten}}{Rad_{2,vorne} - Rad_{2,hinten}} \right) * S_1$$

Darin bedeuten

| | |
|---|---|
| $Rad_1'$ | das obere Übersprechmäß, |
| $Lat_{1,vorne}$ | die obere Lateralkraft bei Krafteinleitung vorne, |
| $Lat_{1,hinten}$ | die obere Lateralkraft bei krafteinleitung hinten, |
| $Lat_{2,vorne}$ | die untere Lateralkraft bei Krafteinleitung vorne, |
| $Lat_{2,hinten}$ | die untere Lateralkraft bei Krafteinleitung hinten, |
| $Rad_{i,vorne}$ | die obere Radialkraft bei Krafteinleitung vorne, |
| $Rad_{1,hinten}$ | die obere Radialkraft bei Krafteinleitung hinten, |
| $Rad_{2,vorne}$ | die untere Radialkraft bei Krafteinleitung vorne, |
| $Rad_{2,hinten}$ | die untere Radialkraft bei Krafteinleitung hinten und |
| $S_1$ | ein Skalierungsfaktor. |

In einem zweiten Schritt wird ein Konusfehler für einen Fahrzeugreifen bei vorgegebener Last ermittelt nach der Formel:

$$K = \frac{CONY_{DOT} + CONY_{NDOT}}{LOAD_{DOT} + LOAD_{NDOT}} * S_2$$

Darin bedeuten

| | |
|---|---|
| $K$ | ein anlagenabhängiger Konusfehler, |
| $CONY_{DOT}$ | ein Konuseffekt bei DOT oben, |
| $CONY_{NDOT}$ | ein Konuseffekt bei DOT unten, |
| $LOAD_{DOT}$ | eine Radiallast durch den Fahrzeugreifen bei DOT oben, |
| $LOAD_{NDOT}$ | eine Radiallast durch den Fahrzeugreifen bei DOT unten und |
| $S_2$ | ein Skalierungsfaktor. |

In einem dritten Schritt werden aus dem Übersprechmaß $Rad_1'$ und dem Konusfehler K vollständige Korrekturwerte $Rad_1 = Rad_1' + K/2$ und $Rad_2 = - Rad_1' + K/2$ ermittelt. Mit diesen werden die Lateralkraftmesswerte des oberen und unteren Messaufnehmers korrigiert. Dies geschieht nach der allegemeinen Formel:

$$Lat = Lat'_1 + Lat'_2$$

$$mit \ Lat'_x = Lat_x + Rad_x' * Rad_x.$$

Darin bedeuten:

| | |
|---|---|
| $Lat'_x$ | Korrigierter Messwert |
| $Lat_x$ | Messwert des lateralen Kraftaufnehmers |
| $Rad'_x$ | Übersprechmaß Radial auf Lateral |
| $Rad_x$ | Messwert der radialen Kraftaufnehmers |
| $Lat:$ | Resultierende Lateralkraft |

Die endgültige Formel lautet schließlich:

$$Lat= Lat_1 - Rad_1' * Rad_1 / S_1 + Lat_2 - Rad_2' * Rad_2 / S_1$$

$$Lat= Lat_1 + Lat_2 - (Rad_1' * Rad_1 + Rad_2' * Rad_2) / S_1$$

Das Ergebnis des ersten Schrittes liefert ein Maß für die Unterschiedlichkeit der oberen und unteren Messaufnehmer. Dieser Wert ist von Radialkräften auf das Lastrad unabhängig und kann somit in den Speicher eines angeschlossenen Rechners übernommen und für weitere Messungen bei Fahrzeugreifenprüfungen verwendet werden.

Im zweiten Schritt,wird aus dem Konuseffekt und der Last des gegen das Lastrad drückenden Fahrzeugreifen der anlagenabhängige Konusfehler aus den Konuseffekten bei der Markierung oben und unten im Verhältnis zur Last ermittelt.

Aus der im dritten Schritt ermittelten Summe des Übersprechens und des Konusfehlers ergibt sich ein Korrekturwert, um den die gemessene Lateralkraft korrigiert werden muss, um den anlagenabhängigen Konusfehler zu eliminieren. Werden diese korrigierten Werte nun statt der gemessenen Werte für die Lateralkraft eingesetzt, so sind die Werte für den Konuseffekt identisch, unabhängig davon, ob der Fahrzeugreifen mit der Markierung oben oder unten gemessen wird oder an welchem Ort er auf der Mantelfläche des Lastrades abrollt.

Gemäß einer Weiterbildung wird das Übersprechmaß von Radialkräften auf die Messaufnehmer für Lateralkräfte in festgelegten Zeitabständen und/oder nach Wartungs- und Umrüstarbeiten erneut ermittelt.

Es ist möglich, dass sich mit der Zeit oder bei Wartungs- und Umrüstarbeiten die Einspannung der Achse des Lastrades oder auch die Ausrichtung der Messsensoren geringfügig ändert, was dann zu einer Änderung des Übersprechverhaltens führt. Durch eine erneute Ermittlung können solche Änderungen eliminiert werden und es kann sichergestellt werden, dass die Prüfanlage stets reproduzierbare Ergebnisse liefert.

Weiterhin ist vorgesehen, dass die Messwerte der Messaufnehmer für die Radial- und Lateralkräfte an der oberen und unteren Einspannung der Drehachse des Lastrades getrennt erfasst und verarbeitet werden und erst nach einer Korrektur eine Summenbildung der Lateralkräfte vorgenommen wird.

Aufgrund dieser getrennten Verarbeitung lassen sich die Einflüsse des Übersprechens auf die einzelnen Messaufnehmer selektieren und die erforderlichen Korrekturwerte gewinden.

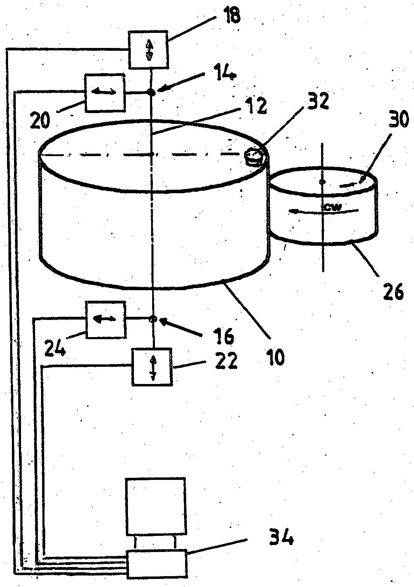

Nachfolgend wird die Erfindung anhand der Zeichnung und einem Messbeispiel erläutert.

Die Zeichnung zeigt eine schematische Darstellung einer Reifenprüfanlage mit einem Lastrad 10, das über seine senkrechte Drehachse 12 oben und unten eingespannt ist. An den oberen und unteren Einspannorten 14, 16 befinden sich Meßaufnehmer, und zwar oben ein Messaufnehmer 18 für Lateralkräfte, ein Messaufnehmer 20 für Radialkräfte in Richtung der aufgeprägten Last durch einen zu prüfenden Fahrzeugreifen und an der unteren Einspannstelle 16 ebenfalls ein Messaufnehmer 22 für Lateralkräfte und ein Messaufnehmer 24 für Radialkräfte.

Die Messaufnehmer 18, 20, 22, 24 sind vorzugsweise als Dehnungsmessbrücken ausgebildet und Signalleistungen führen zu einem Rechner 34. In diesem Rechner 34 werden die vier Signales der Messaufnehmer 18, 20, 22, 24 ausgewertet und korrigiert.

Achsparallel zu dem Lastrad 10 befindet sich ein zu prüfender Fahrzeugreifen 26, der in eine Felgenanordnung eingespannt ist und über die Felgenanordnung mittels eines Antriebs in Drehung versetzbar ist. Der Fahrzeugreifen 26 kann dabei mit einer Last gegen das Lastrad 10 gedrückt werden, die etwa der im späteren Fahrbetrieb aufgebrachten Last entspricht.

In einem ersten Schritt wird zur Ermittlung des Übersprechmaßes ein Gewicht 32 exzentrisch oben auf das Lastrad 10 gelegt, und es werden zunächst ohne Last durch den zu prüfenden Fahrzeugreifen statisch Messwerte ermittelt. Die erste Messwertsserie wird ermittelt, wenn sich das Lastrad 10 mit dem Gewicht 32 in einer Position befindet, die der Berührungslinie des Lastrades 10 mit dem zu prufenden Fahrzeugreifen 26 bei der Reifenprüfung benachbart ist. Das Gewicht 32 liegt dabei auf einer Verbindungsgeraden zwischen der Achse 12 des Lastrades 10 und der Berührungslinie. Danach wird das Lastrad 10 um 180° gedreht, so dass das Gewicht 32 in einer gegenüber liegenden Position ausgerichtet wird. Danach werden wieder eine Serie Messwerte ermittelt.

Bei einem Messbeispiel wurde ein Gewicht verwendet, das eine Kraft von 100 N ausübt. In der vorderen Position, d. h. der Berührungslinie benachbarten Position, wurden folgende Werte gemessen: $Rad_1$ = -6477, $Lat_1$ = -101168, $Rad_2$ = +8218, $Lat_2$ = +28398.

In der hinteren, also gegenüber liegenden Position, wurden folgende Werte ermittelt: $Rad_1$ = +7020, $Lat_1$ = -101816, $Rad_2$ = -5284, $Lat_2$ = +29055.

Eingesetzt in die Formel

$$Rad_1' = \left( \frac{Lat_{1,vorne} - Lat_{1,hinten}}{Rad_{1,vorne} - Rad_{1,hinten}} - \frac{Lat_{2,vorne} - Lat_{2,hinten}}{Rad_{2,vorne} - Rad_{2,hinten}} \right) * S_1$$

ergibt sich bei einem Skalierungs.faktor $S_1$ = 40000 ein Übersprechmaß für $Rad_1$ von 25 und für $Rad_2$ von -25. Diese Werte werden für folgende Reifenprüfungen gespeichert.

Bei einer nun folgenden Messung mit einem Reifen wurden bei einer Last von 4000 N ein Konuseffekt bei oben liegendem DOT 30 von 50 und bei unten liegendem DOT 30 von -64 gemessen. Eingesetzt in die Formel für den Konusfehler bei einem Skalierungsfaktor $S_2$ = 160000 ergibt sich ein Wert von -280. Nach Berücksichtigung des Übersprechmaßes führt dies zu einer Korrektur des Konusfehlers für $Rad_1$ von -255 und $Rad_2$ von - 305.

Werden jetzt die gemessenen Werte für die Lateralkräfte um die vollständigen Korrekturwerte gemäß der im dritten Schritt angeandten Formel korrigiert, so führen beide Messungen des Konuseffektes bei $DOT_{oben}$ und $DOT_{unten}$ zu gleichen Ergebnissen, im vorliegenden Fall zu 57 und -57.

**Patentansprüche**

1. Verfahren zur Korrektur von Lateralkraftmesswerten, die zur Bestimmung des Konuseffektes eines Fahrzeugreifens (26) mittels Messaufnehmer (18, 20, 22, 24) für Lateral- und Radialkräfte an einer oberen und unteren Einspannung (15, 16) einer senkrechten Drehachse (12) eines Lastrades (10) einer Fahrzeugreifen-Prüfanlage erfasst werden, wobei zunächst ohne Last durch einen zu prüfenden Fahrzeugreifen statisch Messwerte ermittelt werden, indem zumindest einmalig das Lastrad (10) durch ein exzentrisch auf das Lastrad (10) gelegte Gewicht (32) mit einer Kraft beaufschlagt wird und die auf die obere und untere Einspannung (14, 16) der Drehachse (12) des Lastrades (10) wirkenden Lateral- und Radialkräfte sowohl in einer Position der Krafteinleitung an oder nahe einer Kontaktlinie des Lastrades (10) mit einem Fahrzeugsreifen (26) als auch in einer bezüglich der Drehachse (12) des Lastrades (10) gegenüberliegenden Position erfasst werden und aus den Unterschieden der erfassten oberen und unteren Lateral- und Radialkräfte eine Korrekturgröße jewonnen wird, mit der die Lateralkraftmesswerte in Abhängigkeit von Radialkraftmesswerten bei anschließenden Reifenprüfungen korrigiert werden.

2. Verfahren nach Anspruch 1, **dadurch gekennzeichnet**, das in einem ersten Schritt ein Übersprechmaß von Radialkräften auf die Messaufnehmer für Lateralkräfte ermittelt wird nach der Formel:

$$Rad_1' = \left( \frac{Lat_{1,vorne} - Lat_{1,hinten}}{Rad_{1,vorne} - Rad_{1,hinten}} - \frac{Lat_{2,vorne} - Lat_{2,hinten}}{Rad_{2,vorne} - Rad_{2,hinten}} \right) * S_1$$

wobei

$Rad_1'$ das obere Übersprechmaß,
$Lat_{1,vorne}$ die obere Lateralkraft bei Krafteinleitung vorne,
$Lat_{1,hinten}$ die obere Lateralkraft bei Krafteinleitung hinten,
$Lat_{2,vorne}$ die untere Lateralkraft bei Krafteinleitung vorne,
$Lat_{2,hinten}$ die untere Lateralkraft bei Krafteinleitung hinten,
$Rad_{1,vorne}$ die obere Radialkraft bei Krafteinleitung vorne,
$Rad_{1,hinten}$ die obere Radialkraft bei Krafteinleitung hinten,
$Rad_{2,vorne}$ die untere Radialkraft bei Krafteinleitung vorne,
$Rad_{2,hinten}$ die untere Radialkraft bei Krafteinleitung hinten und
$S_1$ ein Skalierungsfaktor sind,

dass in einem zweiten Schritt ein Konusfehler für einen Fahrzeugreifen bei vorgegebener Last ermittelt wird nach der Formel:

$$K = \frac{CONY_{DOT} + CONY_{NDOT}}{LOAD_{DOT} + LOAD_{NDOT}} * S_2$$

wobei

K ein anlagenabhängiger Konusfehler,
$CONY_{DOT}$ ein Konuseffekt bei DOT oben,
$CONY_{NDOT}$ ein Konuseffekt bei DOT unten,
$LOAD_{DOT}$ eine Radiallast durch den Fahrzeugreifen bei DOT oben,
$LOAD_{NDOT}$ eine Radiallast durch den Fahrzeugreifen bei DOT unten und
$S_2$ ein Skalierungsfaktor sind

und dass in einem dritten Schritt aus dem Übersprechmaß $Rad_1$' und dem Konusfehler K Korrekturwerte $Rad_1$ = $Rad_1$' + K/2 und $Rad_2$ = - $Rad_1$' + K/2 ermittelt werden, mit denen die Lateralkraftmesswerte des oberen und unteren Messaufnehmers korrigiert werden.

3. Verfahren nach Anspruch 2, **dadurch gekennzeichnet, dass** das Übersprechmaß von Radialkräften auf die Messaufnehmer für Lateralkräfte in festgelegten Zeitabständen und/oder nach Wartungs- und Umrüstmaßnahmen erneut ermittelt wird.

4. Verfahren nach einem der Ansprüche 1 bis 3, **-dadurch gekeanzeichnet,** dass die Messwerte der Messaufnehmer für die Radial- und Lateralkräfte, an der oberen und unteren Einspannung der Drehachse des Lastrades getrennt erfasst und verarbeitet werden und erst nach einer Korrektur eine Summenbildung der Lateralkräfte vorgenommen wird.

**Claims**

1. A method of correcting lateral force measurement values which, in order to determine the cone effect of a vehicle tyre (26), are recorded by means of measuring sensors (18, 20, 22, 24) for lateral and radial forces at an upper and lower fixing (15, 16) of a perpendicular axis of rotation (12) of a load wheel (10) of a vehicle-tyre testing unit, wherein measurement values are firstly ascertained statically without a load through a vehicle tyre which is to be tested, by the load wheel (10) being loaded with a force at least once by a weight (32) which is placed eccentrically on the load wheel (10) and the lateral and radial forces acting on the upper and lower fixing (14, 16) of the axis of rotation (12) of the load wheel (10) being recorded both in a position of the application of force at or near a contact line of the load wheel (10) with a vehicle tyre (26) and in an opposite position relative to the axis of rotation (12) of the load wheel (10) and, from the differences in the recorded upper and lower lateral and radial forces, a correction variable is obtained with which the lateral force measurement values are corrected as a function of radial measurement values in the case of subsequent tyre tests.

2. The method according to Claim 1, **characterised in that** in a first step a level of cross-talk of radial forces on the measurement sensors for lateral forces is ascertained according to the formula:

$$Rad_1' = \left( \frac{Lat_{1,front} - Lat_{1,rear}}{Rad_{1,front} - Rad_{1,rear}} - \frac{Lat_{2,front} - Lat_{2,rear}}{Rad_{2,front} - Rad_{2,rear}} \right) * S_1$$

wherein

$Rad_1$' is the upper level of crosstalk
$Lat_{1,front}$ is the upper lateral force in the case of application of force to the front,
$Lat_{1,rear}$ is the upper lateral force in the case of application of force to the rear,
$Lat_{2,front}$ is the lower lateral force in the case of application of force to the front,
$Lat_{2,rear}$ is the lower lateral force in the case of application of force to the rear,
$Rad_{1,front}$ is the upper radial force in the case of application of force to the front,
$Rad_{1,rear}$ is the upper radial force in the case of application of force to the rear,
$Rad_{2,front}$ is the lower radial force in the case of application of force to the front,
$Rad_{2,rear}$ is the lower radial force in the case of application of force to the rear and
$S_1$ is a scaling factor,

that in a second step a cone error for a vehicle tyre, at a given load, is ascertained according to the formula:

$$K = \frac{CONY_{DOT} + CONY_{NDOT}}{LOAD_{DOT} + LOAD_{NDOT}} * S_2$$

wherein

K is a unit-dependent cone error,
$CONY_{DOT}$ is a cone effect when DOT is at the top,
$CONY_{NDOT}$ is a cone effect when DOT is at the bottom,
$LOAD_{DOT}$ is a radial load through the vehicle tyre when DOT is at the top,
$LOAD_{NDOT}$ is a radial load through the vehicle tyre when DOT is at the bottom,
$S_2$ is a scaling factor,

and **in that**, in a third step, from the crosstalk level $Rad_1$' and the cone error K, correction values $Rad_1 = Rad_1$' + K/2 and $Rad_2$ = - $Rad_1$' + K/2 are ascertained with which the lateral force measurement values of the upper and lower measurement sensors are corrected.

3. The method according to Claim 2, **characterised in that** the level of cross-talk of radial forces on the measurement sensors for lateral forces is ascertained anew at fixed time intervals and/or after maintenance and retrofitting measures.

4. The method according to any one of Claims 1 to 3, **characterised in that** the measurement values of the measurement sensors for the radial and lateral forces at the upper and lower fixings of the axis of rotation of the load wheel are recorded and processed separately and summation of the lateral forces is carried out only after a correction.

## Revendications

1. Procédé de correction de valeurs de mesure de contraintes latérales, qui sont captées au niveau d'un serrage supérieur et inférieur (15, 16) d'un axe rotatif perpendiculaire (12) d'une roue de charge (10) d'une installation d'essai de pneumatiques de véhicule au moyen de capteurs (18, 20, 22, 24) de contraintes latérales et radiales pour déterminer l'effet de cône d'un pneumatique de véhicule (26), des valeurs de mesure étant dans un premier temps déterminées statiquement, sans la charge d'un pneumatique de véhicule à essayer, en appliquant à la roue de charge (10) au moins une fois une contrainte par un poids posé excentriquement sur la roue de charge (10) et en captant les contraintes latérales et radiales agissant sur le serrage supérieur et inférieur (14, 16) de l'axe rotatif (12) de la roue de charge (10) non seulement en position d'introduction de force au niveau ou à proximité d'une ligne de contact entre la roue de charge (10) et un pneumatique de véhicule (26), mais encore en une position opposée par rapport à l'axe rotatif (12) de la roue de charge (10), ainsi qu'en déterminant à partir des différences entre les contraintes latérales et radiales supérieures et inférieures captées une grandeur de correction, à l'aide de laquelle les valeurs de mesure de contraintes latérales sont corrigées en fonction de valeurs de mesure de contraintes radiales lors d'essais ultérieurs de pneumatiques.

2. Procédé suivant la revendication 1, **caractérisé en ce qu'**au cours d'une première étape est déterminée une cote d'interférence de contraintes radiales sur les capteurs de contraintes latérales suivant la formule

$$Rad1' = \left( \frac{Lat_{1,\,avant} - Lat_{1,\,arrière}}{Rad_{1,\,avant} - Rad_{1,\,arrière}} - \frac{Lat_{2,\,avant} - Lat_{2,\,arrière}}{Rad_{2,\,avant} - Rad_{2,\,arrière}} \right) * S_1$$

dans laquelle

$Rad_1$' représente la cote d'interférence supérieure,
$Lat_1$, avant représente la contrainte latérale supérieure à introduction de force depuis l'avant,
$Lat_1$, arrière représente la contrainte latérale supérieure à introduction de force depuis l'arrière
$Lat_2$, avant représente la contrainte latérale inférieure à introduction de force depuis l'avant
$Lat_2$, arrière représente la contrainte latérale inférieure à introduction de force depuis l'arrière,
$Rad_1$, avant représente la contrainte radiale supérieure à introduction de force depuis l'avant,

Rad$_1$, arrière représente la contrainte radiale supérieure à introduction de force depuis l'arrière,

Rad$_2$, avant représente la contrainte radiale inférieure à introduction de force depuis l'avant,

Rad$_2$, arrière représente la contrainte radiale inférieure à introduction de force depuis l'arrière, et

S$_1$ représente un facteur d'échelle,

qu'au cours d'une seconde étape est déterminée une erreur de cône pour un pneumatique de véhicule à charge prédéterminée suivant la formule :

$$K = \frac{CONY_{DOT} + CONY_{NDOT}}{LOAD_{DOT} + LOAD_{NDOT}} * S_2$$

dans laquelle

K représente une erreur de cône qui est fonction de l'installation,

CONY$_{DOT}$ représente un effet de cône à DOT supérieur,

CONY$_{NDOT}$ représente un effet de cône à DOT inférieur,

LOAD$_{DOT}$ représente une charge radiale par le pneumatique à DOT supérieur,

LOAD$_{NDOT}$ représente une charge radiale par le pneumatique à DOT inférieur et

S$_2$ représente un facteur d'échelle

et qu'au cours d'une troisième étape sont déterminées à partir de la mesure d'interférence Rad$_1$' et l'erreur de cône K des valeurs de correction Rad$_1$ = Rad$_1$' + K/2 et Rad$_2$ = - Rad$_1$' + K/2, à l'aide desquelles les valeurs de mesure de contraintes latérales du capteur supérieur et inférieur sont corrigées.

3. Procédé suivant la revendication 2, **caractérisé en ce que** la cote d'interférence de contraintes radiales sur les capteurs de contraintes latérales est déterminée à nouveau à des intervalles fixes et/ou après des opérations de maintenance et de rééquipement.

4. Procédé suivant une des revendications 1 à 3, **caractérisé en ce que** les valeurs de mesure des capteurs de contraintes radiales et latérales au niveau du serrage supérieur et inférieur de l'axe rotatif de la roue de charge sont captées et traitées séparément et qu'il est procédé à une addition des contraintes latérales seulement après une correction.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 3473422 A
- DE 2715111 A
- US 6139401 A